# EUROPEAN PATENT APPLICATION

(11) **EP 4 163 036 A1**
(43) Date of publication of application: **12.04.2023**
(21) Application number: 20938936.0
(22) Date of filing: 03.06.2020
(51) Int. Cl.: B23B 51/00

(54) **DRILL**

(71) Applicant: Sumitomo Electric Hardmetal Corp., Itami-shi, Hyogo 664-0016 (JP); AISIN CORPORATION, Kariya-shi, Aichi 448-8650 (JP)
(72) Inventor: TAKAHASHI, Koji, Itami-shi, Hyogo 664-0016 (JP); JINDAI, Masaaki, Itami-shi, Hyogo 664-0016 (JP); KIHARA, Akihiro, Anjo-shi, Aichi 444-1192 (JP); MATSUNO, Yusuke, Anjo-shi, Aichi 444-1192 (JP)
(74) Representative: Boult Wade Tennant LLP
(86) International application number: PCT/JP2020/021941
(87) International publication number: WO 2021/245840

(57) **Abstract**

A drill has a first main body portion and a second main body portion. The first main body includes a chip discharging surface, a flank face, and an outer peripheral surface. A ridgeline between the chip discharging surface and the flank face constitutes a cutting edge. The chip discharging surface has an auxiliary flute surface provided in a form of a helix around a center axis, the auxiliary flute surface being contiguous to the cutting edge, the auxiliary flute surface being recessed in a direction opposite to a rotation direction of the drill. An auxiliary cutting edge portion has a first end portion and a second end portion. When viewed in a direction along the center axis, a value obtained by dividing the maximum value of the diameter of the second main body portion by the diameter of the first main body portion is 1.5 or more. When viewed in the direction along the center axis, a distance between the center axis and the first end portion is 20% or more and less than 40% of a distance between the center axis and the outer peripheral end portion of the cutting edge, and a distance between the center axis and the second end portion is 60% or more and 80% or less of a distance between the center axis and the outer peripheral end portion. A ratio of a core thickness of a main flute surface to the diameter of the first main body portion is 40% or more and 60% or less. An axial rake angle of the auxiliary flute surface at an intermediate position of the auxiliary cutting edge portion is positive.

## Description

### TECHNICAL FIELD

The present disclosure relates to a drill.

### BACKGROUND ART

Each of Japanese Patent Laying-Open No. 2009-18384 (PTL 1) and Japanese Patent Laying-Open No. 2006-55941 (PTL 2) describes a drill for processing a cast hole of a cast product.

### CITATION LIST

### PATENT LITERATURE

PTL 1: Japanese Patent Laying-Open No. 2009-18384
PTL 2: Japanese Patent Laying-Open No. 2006-55941

### SUMMARY OF INVENTION

A drill according to the present disclosure includes a first main body portion and a second main body portion. The second main body portion is located rearward with respect to the first main body portion and has a diameter different from a diameter of the first main body portion. The first main body portion includes: a chip discharging surface provided in a form of a helix around a center axis of the drill; a flank face contiguous to the chip discharging surface; and an outer peripheral surface contiguous to each of the chip discharging surface and the flank face. A ridgeline between the chip discharging surface and the flank face constitutes a cutting edge. The chip discharging surface includes: a main flute surface provided in a form of a helix around the center axis, the main flute surface being contiguous to the cutting edge; and an auxiliary flute surface provided in a form of a helix around the center axis, the auxiliary flute surface being contiguous to each of the cutting edge and the main flute surface, the auxiliary flute surface being recessed with respect to the main flute surface in a direction opposite to a rotation direction of the drill. An auxiliary cutting edge portion constituted of a boundary between the flank face and the auxiliary flute surface has a first end portion and a second end portion located opposite to the first end portion. When viewed in a direction along the center axis, a value obtained by dividing a maximum value of the diameter of the second main body portion by the diameter of the first main body portion is 1.5 or more. When viewed in the direction along the center axis, a distance between the center axis and the first end portion is 20% or more and less than 40% of a distance between the center axis and an outer peripheral end portion of the cutting edge, and a distance between the center axis and the second end portion is 60% or more and 80% or less of the distance between the center axis and the outer peripheral end portion. A ratio of a core thickness of the main flute surface to the diameter of the first main body portion is 40% or more and 60% or less. An axial rake angle of the auxiliary flute surface at an intermediate position of the auxiliary cutting edge portion is positive.

### BRIEF DESCRIPTION OF DRAWINGS

Fig. 1 is a schematic plan view showing a configuration of a drill according to the present embodiment.
Fig. 2 is an enlarged schematic view of a region II in Fig. 1.
Fig. 3 is a schematic front view showing the configuration of the drill according to the present embodiment.
Fig. 4 is an enlarged schematic view of a region IV in Fig. 3.
Fig. 5 is a diagram showing an axial rake angle of a first cutting edge.
Fig. 6 is a schematic cross sectional view taken along a line VI-VI of Fig. 4.
Fig. 7 is a schematic cross sectional view taken along a line VII-VII of Fig. 1.
Fig. 8 is a schematic cross sectional view for illustrating a deviation between the center axis of a cast hole and the center axis of the drill.
Fig. 9 is a schematic plan view for illustrating the deviation between the center axis of the cast hole and the center axis of the drill.
Fig. 10 is a schematic cross sectional view showing a state in which a cast hole is processed by the drill.
Fig. 11 is a diagram showing a relation between an end point of an auxiliary flute and a hole positional tolerance.
Fig. 12 is a diagram showing a relation between a start point of the auxiliary flute and the hole positional tolerance.
Fig. 13 is a diagram showing a relation between a concave value of the auxiliary flute and the hole positional tolerance.
Fig. 14 is a diagram showing an axial rake angle of a chip discharging surface of the drill.

### DETAILED DESCRIPTION

### [Problem to be Solved by the Present Disclosure]

It is an object of the present disclosure to provide a drill to reduce a hole positional tolerance in processing a cast hole of an aluminum alloy casting.

### [Advantageous Effect of the Present Disclosure]

According to the present disclosure, there can be provided a drill to reduce a hole positional tolerance in processing a cast hole of an aluminum alloy casting.

### [Summary of Embodiments of the Present Disclosure]

First, a summary of an embodiment of the present disclosure will be described.
(1) A drill 100 according to the present disclosure includes a first main body portion 81 and a second main body portion 82. Second main body portion 82 is located rearward with respect to first main body portion 81 and has a diameter different from a diameter of first main body portion 81. First main body portion 81 includes: a chip discharging surface 1 provided in a form of a helix around a center axis X of drill 100; a flank face 2 contiguous to chip discharging surface 1; and an outer peripheral surface 3 contiguous to each of chip discharging surface 1 and flank face 2. A ridgeline between chip discharging surface 1 and flank face 2 constitutes a cutting edge 4. Chip discharging surface 1 includes: a main flute surface 72 provided in a form of a helix around center axis X, main flute surface 72 being contiguous to cutting edge 4; and an auxiliary flute surface 73 provided in a form of a helix around center axis X, auxiliary flute surface 73 being contiguous to each of cutting edge 4 and main flute surface 72, auxiliary flute surface 73 being recessed with respect to main flute surface 72 in a direction opposite to a rotation direction of the drill. An auxiliary cutting edge portion 63 constituted of a boundary between flank face 2 and auxiliary flute surface 73 has a first end portion 91 and a second end portion 92 located opposite to first end portion 91. When viewed in a direction along center axis X, a value obtained by dividing a maximum value of the diameter of second main body portion 82 by the diameter of first main body portion 81 is 1.5 or more. When viewed in the direction along center axis X, a distance between center axis X and first end portion 91 is 20% or more and less than 40% of a distance between center axis X and an outer peripheral end portion of cutting edge 4, and a distance between center axis X and second end portion 92 is 60% or more and 80% or less of the distance between center axis X and the outer peripheral end portion. A ratio of a core thickness of main flute surface 72 to the diameter of first main body portion 81 is 40% or more and 60% or less. An axial rake angle θ2 of auxiliary flute surface 73 at an intermediate position 93 of auxiliary cutting edge portion 63 is positive.
(2) In drill 100 according to (1), when viewed in the direction along center axis X, a concave value H of auxiliary cutting edge portion 63 with respect to a straight line passing through first end portion 91 and second end portion 92 may be 1% or more and 5% or less of the diameter of first main body portion 81.
(3) In drill 100 according to (1) or (2), a margin 31 contiguous to each of cutting edge 4 and flank face 2 may be provided at outer peripheral surface 3. A length of margin 31 in a peripheral direction may be 0.1 mm or more and 0.3 mm or less.
(4) In drill 100 according to any one of (1) to (3), point angle θ1 of cutting edge 4 may be 150° or more and 175° or less.
(5) In drill 100 according to any one of (1) to (4), the diameter of first main body portion 81 may be 1 mm or more and 10 mm or less.

### [Details of Embodiments of the Present Disclosure]

Hereinafter, an embodiment of the present disclosure (hereinafter, also referred to as "the present embodiment") will be described in detail with reference to figures. It should be noted that in the below-described figures, the same or corresponding portions are denoted by the same reference characters, and will not be described repeatedly.

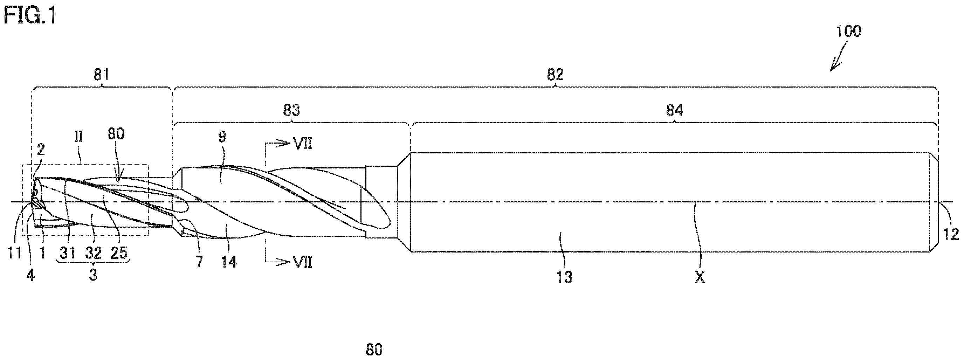

Fig. 1 is a schematic plan view showing a configuration of a drill according to the present embodiment. As shown in Fig. 1, a drill 100 according to the present embodiment is a drill for processing a cast hole, and has a first main body portion 81 and a second main body portion 82. Second main body portion 82 is located rearward with respect to first main body portion 81. Second main body portion 82 has a diameter different from a diameter of first main body portion 81. Second main body portion 82 is contiguous to first main body portion 81. Second main body portion 82 has a third main body portion 83 and a shank portion 84. Third main body portion 83 is located rearward with respect to first main body portion 81. Third main body portion 83 is contiguous to first main body portion 81. Shank portion 84 is located rearward with respect to third main body portion 83. Shank portion 84 is contiguous to third main body portion 83. First main body portion 81 constitutes a front end 11 of drill 100. Shank portion 84 constitutes a rear end 12 of drill 100.

Front end 11 of drill 100 is a portion to face a workpiece. Rear end 12 of drill 100 is a portion to face a tool for rotating drill 100. A shank 13 is a portion to be attached to the tool for rotating drill 100. A center axis X passes through front end 11 and rear end 12. A direction along center axis X is an axial direction. A direction perpendicular to the axial direction is a radial direction. In the present specification, a direction from front end 11 toward rear end 12 is referred to as "rearward in the axial direction". Conversely, a direction from rear end 12 toward front end 11 is referred to as "forward in the axial direction". Drill 100 is rotatable around center axis X.

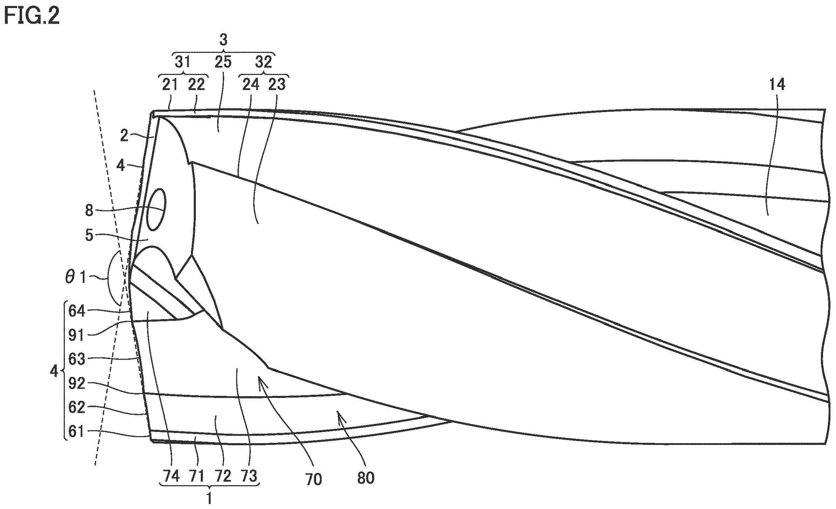

Fig. 2 is an enlarged schematic view of a region II in Fig. 1. As shown in Fig. 2, first main body portion 81 of drill 100 according to the present embodiment has a first outer peripheral surface 3. First outer peripheral surface 3 may be provided with a first margin 31 and a second margin 32. First margin 31 includes a first outer peripheral region 21 and a second outer peripheral region 22. Second margin 32 includes a third outer peripheral region 23 and a fourth outer peripheral region 24. Outer peripheral surface 3 has a fifth outer peripheral region 25. First outer peripheral region 21 is contiguous to second outer peripheral region 22. Second outer peripheral region 22 is contiguous to fifth outer peripheral region 25. Second outer peripheral region 22 is inclined with respect to each of first outer peripheral region 21 and fifth outer peripheral region 25. Fourth outer peripheral region 24 is contiguous to fifth outer peripheral region 25. Third outer peripheral region 23 is contiguous to fourth outer peripheral region 24. Fourth outer peripheral region 24 is inclined with respect to each of fifth outer peripheral region 25 and third outer peripheral region 23. Fifth outer peripheral region 25 is located between second outer peripheral region 22 and fourth outer peripheral region 24.

As shown in Fig. 2, first main body portion 81 has first cutting edges 4. Each of first cutting edges 4 is located at front end 11 of drill 100. A point angle θ1 of first cutting edge 4 is, for example, 150° or more and 175° or less. The lower limit of point angle θ1 is not particularly limited, but may be 155° or more or 160° or more, for example. The upper limit of point angle θ1 is not particularly limited, but may be, for example, 170° or less. It should be noted that point angle θ1 of first cutting edge 4 is an angle formed by two first cutting edges 4 when projecting first cutting edges 4 in parallel on a plane parallel to center axis X.

As shown in Fig. 2, first main body portion 81 of drill 100 according to the present embodiment has a chip discharging surface 1. Chip discharging surface 1 is provided in the form of a helix around center axis X of drill 100. Chip discharging surface 1 has a first surface 71, a main flute surface 72, an auxiliary flute surface 73, and a thinning face 74. First surface 71 is contiguous to first outer peripheral surface 3. First surface 71 is, for example, a return surface. Main flute surface 72 is contiguous to first surface 71. Main flute surface 72 is located on the inner peripheral side with respect to first surface 71. Main flute surface 72 is located between first surface 71 and auxiliary flute surface 73. Main flute surface 72 is provided in the form of a helix around center axis X. Main flute surface 72 is contiguous to cutting edge 4.

Next, a method of forming main flute surface 72 and auxiliary flute surface 73 will be described. First, a main flute 80 in the form of a helix is formed in first main body portion 81 having a cylindrical shape. A surface that constitutes main flute 80 is main flute surface 72. Next, an auxiliary flute 70 in the form of a helix in main flute surface 72 is formed. A surface that constitutes auxiliary flute 70 is an auxiliary flute surface 73. The core thickness of main flute surface 72 is a core thickness of main flute surface 72 before auxiliary flute 70 is formed in main flute surface 72.

Chip discharging surface 1 is provided with auxiliary flute 70. Auxiliary flute 70 is constituted of auxiliary flute surface 73. Auxiliary flute surface 73 is contiguous to main flute surface 72. Auxiliary flute surface 73 is located on the inner peripheral side with respect to main flute surface 72. Auxiliary flute surface 73 is located between main flute surface 72 and thinning face 74. Auxiliary flute surface 73 is provided in the form of a helix around center axis X. Auxiliary flute surface 73 is recessed with respect to main flute surface 72 in a direction opposite to a rotation direction R of drill 100. Auxiliary flute surface 73 is contiguous to first cutting edge 4. Thinning face 74 is contiguous to auxiliary flute surface 73. Thinning face 74 is located on the inner peripheral side with respect to auxiliary flute surface 73. Each of first surface 71, main flute surface 72, and thinning face 74 is contiguous to first cutting edge 4.

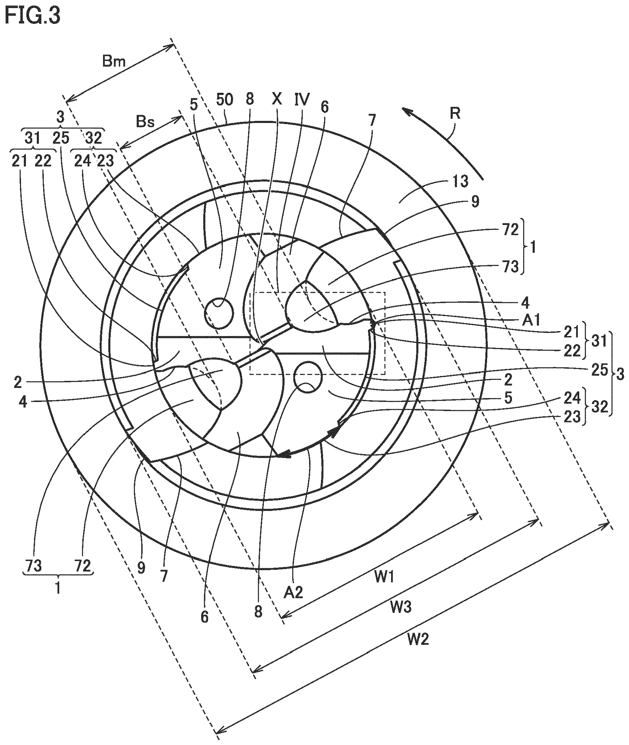

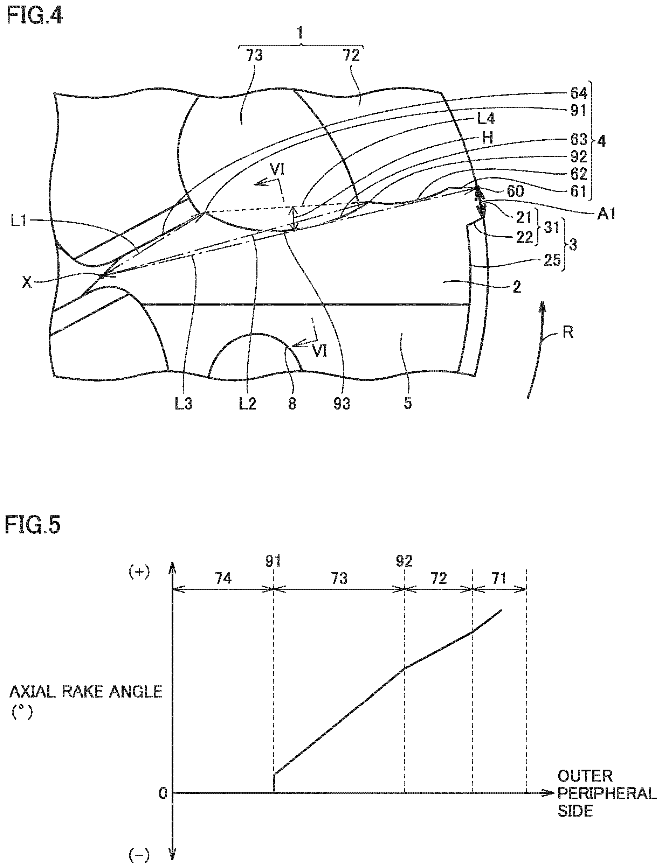

Fig. 3 is a schematic front view showing the configuration of the drill according to the present embodiment. Fig. 4 is an enlarged schematic view of a region IV in Fig. 3. As shown in Figs. 3 and 4, first main body portion 81 of drill 100 according to the present embodiment includes a flank face 2, a first rear surface 5, and a second rear surface 6. Flank face 2 is contiguous to chip discharging surface 1. First outer peripheral surface 3 is contiguous to each of chip discharging surface 1 and flank face 2. A ridgeline between chip discharging surface 1 and flank face 2 constitutes first cutting edge 4. In Fig. 3, an arrow indicates rotation direction R of drill 100.

First rear surface 5 is contiguous to flank face 2. First rear surface 5 is located rearward with respect to flank face 2 in the rotation direction. A coolant supply hole 8 is provided in first rear surface 5. Second rear surface 6 is contiguous to first rear surface 5. Second rear surface 6 is located rearward with respect to first rear surface 5 in the rotation direction. In the radial direction, the outer peripheral surface (shank outer peripheral surface 50) of the shank is located on the outer peripheral side with respect to first outer peripheral surface 3.

As shown in Fig. 3, first outer peripheral region 21 is contiguous to each of first cutting edge 4 and flank face 2. Second outer peripheral region 22 is located rearward with respect to first outer peripheral region 21 in the rotation direction. Second outer peripheral region 22 is contiguous to flank face 2. In the radial direction, first outer peripheral region 21 is located on the outer peripheral side with respect to flank face 2. Third outer peripheral region 23 is contiguous to first rear surface 5. Fourth outer peripheral region 24 is located forward with respect to third outer peripheral region 23 in the rotation direction. Fourth outer peripheral region 24 is contiguous to first rear surface 5. Fifth outer peripheral region 25 is contiguous to each of flank face 2 and first rear surface 5. In the radial direction, fifth outer peripheral region 25 is located on the inner peripheral side with respect to each of first outer peripheral region 21 and third outer peripheral region 23.

As shown in Fig. 4, first margin 31 is contiguous to first cutting edge 4. The length (first length A1) of first margin 31 in the peripheral direction is 0.1 mm or more and 0.3 mm or less. The lower limit of first length A1 is not particularly limited, but may be, for example, 0.15 mm or more. The upper limit of first length A1 is not particularly limited, but may be 0.25 mm or less, for example.

As shown in Fig. 3, second margin 32 is located rearward with respect to first margin 31 in the rotation direction. Second margin 32 is separated from first cutting edge 4. The length (second length A2) of second margin 32 in the peripheral direction is, for example, 0.3 mm or more and 7 mm or less. Second length A2 may be larger than first length A1. Second length A2 may be five times or more as large as first length A1.

As shown in Fig. 3, a ratio of a core thickness Bm of main flute surface 72 to the diameter (first diameter W1) of first main body portion 81 is, for example, 40% or more and 60% or less. The lower limit of the ratio of core thickness Bm of main flute surface 72 to first diameter W1 is not particularly limited, but may be, for example, 45% or more. The upper limit of the ratio of core thickness Bm of main flute surface 72 to first diameter W1 is not particularly limited, but may be, for example, 55% or less. The diameter (first diameter W1) of first main body portion 81 is a diameter of first outer peripheral surface 3 when viewed in the axial direction (see Fig. 3). As shown in Fig. 3, when viewed in the direction along center axis X, the ratio of core thickness Bm of main flute surface 72 is a ratio of a core thickness of an imaginary main flute surface 72 formed along main flute surface 72.

First diameter W1 is, for example, 1 mm or more and 10 mm or less. The lower limit of first diameter W1 is not particularly limited, but may be, for example, 2 mm or more, or 3 mm or more. The upper limit of first diameter W1 is not particularly limited, but may be, for example, 9 mm or less or 8 mm or less.

As shown in Fig. 1, second main body portion 82 has third main body portion 83 and shank portion 84. Third main body portion 83 has a second cutting edge 7, a second outer peripheral surface 9, and a flute surface 14. Chip discharging surface 1 is contiguous to flute surface 14. Auxiliary flute surface 73 may reach flute surface 14. In the axial direction, second cutting edge 7 is located between first cutting edge 4 and shank portion 84. As shown in Fig. 3, in the radial direction, second cutting edge 7 is located on the outer peripheral side with respect to first cutting edge 4. In the radial direction, second outer peripheral surface 9 is located on the outer peripheral side with respect to first outer peripheral surface 3.

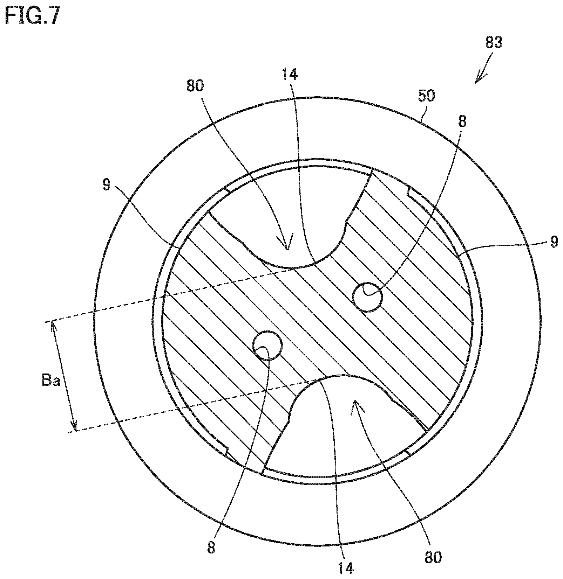

Fig. 7 is a schematic cross sectional view taken along a line VII-VII of Fig. 1. The cross section shown in Fig. 7 is a cross section of third main body portion 83 taken along a plane perpendicular to center axis X when viewed in the direction from front end 11 toward rear end 12. As shown in Fig. 1, main flute 80 is provided to continuously extend from first main body portion 81 to third main body portion 83. As shown in Fig. 7, main flute 80 provided in third main body portion 83 is constituted of flute surface 14. Core thickness Ba of flute surface 14 of third main body portion 83 may be the same as core thickness Bm (see Fig. 3) of main flute surface 72 of first main body portion 81.

As shown in Fig. 3, the diameter (second diameter W2) of shank portion 84 is larger than the diameter (third diameter W3) of third main body portion 83. In this case, the maximum value of the diameter of second main body portion 82 corresponds to second diameter W2. Conversely, the diameter (second diameter W2) of shank portion 84 may be smaller than the diameter (third diameter W3) of third main body portion 83. In this case, the maximum value of the diameter of second main body portion 82 corresponds to third diameter W3.

When viewed in the direction along center axis X, a value obtained by dividing the maximum value of the diameter of second main body portion 82 by the diameter of first main body portion 81 is 1.5 or more. The lower limit of the value obtained by dividing the maximum value of the diameter of second main body portion 82 by the diameter of first main body portion 81 is not particularly limited, but may be, for example, 1.7 or more. The upper limit of the value obtained by dividing the maximum value of the diameter of second main body portion 82 by the diameter of first main body portion 81 is not particularly limited, but may be, for example, 3 or less.

As shown in Fig. 4, first cutting edge 4 includes a first cutting edge portion 61, a second cutting edge portion 62, an auxiliary cutting edge portion 63, and a thinning cutting edge portion 64. First cutting edge portion 61 is constituted of a ridgeline between flank face 2 and first surface 71. Second cutting edge portion 62 is constituted of a ridgeline between flank face 2 and main flute surface 72. Auxiliary cutting edge portion 63 is constituted of a ridgeline between flank face 2 and auxiliary flute surface 73. Thinning cutting edge portion 64 is constituted of a ridgeline between flank face 2 and thinning face 74.

First cutting edge portion 61 includes an outer peripheral end portion 60 of first cutting edge 4. When viewed in the direction along center axis X, first cutting edge portion 61 may be in the form of a straight line. Second cutting edge portion 62 is contiguous to first cutting edge portion 61. First cutting edge portion 61 is located on the outer peripheral side with respect to second cutting edge portion 62. When viewed in the direction along center axis X, second cutting edge portion 62 may be in the form of an arc. As shown in Fig. 4, when viewed in the direction along center axis X, second cutting edge portion 62 may be recessed in the direction opposite to rotation direction R of drill 100. Second cutting edge portion 62 is located between first cutting edge portion 61 and auxiliary cutting edge portion 63. Second cutting edge portion 62 is, for example, a main cutting edge portion.

Auxiliary cutting edge portion 63 is contiguous to second cutting edge portion 62. Second cutting edge portion 62 is located on the outer peripheral side with respect to auxiliary cutting edge portion 63. When viewed in the direction along center axis X, auxiliary cutting edge portion 63 may be in the form of an arc. Auxiliary cutting edge portion 63 is located between second cutting edge portion 62 and thinning cutting edge portion 64. As shown in Fig. 4, when viewed in the direction along center axis X, auxiliary cutting edge portion 63 is recessed in the direction opposite to rotation direction R of drill 100.

Auxiliary cutting edge portion 63 has a first end portion 91 and a second end portion 92. Second end portion 92 is located opposite to first end portion 91. First end portion 91 is a boundary between thinning cutting edge portion 64 and auxiliary cutting edge portion 63. Second end portion 92 is a boundary between second cutting edge portion 62 and auxiliary cutting edge portion 63. Second end portion 92 is located on the outer peripheral side with respect to first end portion 91. From another viewpoint, it can be said that first end portion 91 is a starting point of auxiliary cutting edge portion 63. Second end portion 92 is an end point of auxiliary cutting edge portion 63.

As shown in Fig. 3, core thickness Bs of auxiliary flute surface 73 is a web thickness on the front end side when viewed in the direction along center axis X. Core thickness Bs of auxiliary flute surface 73 is twice as large as a distance (first distance L1) between center axis X and first end portion 91 (see Fig. 4). As shown in Fig. 4, when viewed in the direction along center axis X, the distance (first distance L1) between center axis X and first end portion 91 is 20% or more and less than 40% of a distance (third distance L3) between center axis X and outer peripheral end portion 60 of first cutting edge 4. From another viewpoint, it can be said that the length from center axis X to first end portion 91 is 20% or more and less than 40% of the radius of first outer peripheral surface 3. First distance L1 may be 25% or more or 30% or more of third distance L3. First distance L1 may be 38% or less or 35% or less of third distance L3. First distance L1 may be 30% or more and 38% or less of third distance L3.

As shown in Fig. 4, when viewed in the direction along center axis X, a distance (second distance L2) between center axis X and second end portion 92 is 60% or more and 80% or less of the distance (third distance L3) between center axis X and outer peripheral end portion 60. From another viewpoint, it can be said that the length from center axis X to second end portion 92 is 60% or more and 80% or less of the radius of first outer peripheral surface 3. Second distance L2 may be 65% or more or 68% or more of third distance L3. Second distance L2 may be 75% or less or 70% or less of third distance L3. Second distance L2 may be 60% or more and 70% or less of third distance L3.

As shown in Fig. 4, when viewed in the direction along center axis X, a concave value H of auxiliary cutting edge portion 63 with respect to a straight line (fourth straight line L4) passing through first end portion 91 and second end portion 92 may be 0.5% or more and 7% or less, more preferably 1% or more and 5% or less, of the diameter (first diameter W1) of first main body portion 81. When viewed in the direction along center axis X, the concave value H of auxiliary cutting edge portion 63 with respect to fourth straight line L4 is a distance between fourth straight line L4 and a point at which a distance to fourth straight line L4 is the longest among points on auxiliary cutting edge portion 63. The lower limit of the concave value H of auxiliary cutting edge portion 63 with respect to fourth straight line L4 is not particularly limited, but may be, for example, 1.5% or more or 2% or more of first diameter W1. The upper limit of the concave value H of auxiliary cutting edge portion 63 with respect to fourth straight line L4 is not particularly limited, but may be, for example, 4.5% or less or 4% or less of first diameter W1.

Fig. 5 is a diagram showing an axial rake angle of first cutting edge 4. As shown in Fig. 5, an axial rake angle of each of first surface 71, main flute surface 72, and auxiliary flute surface 73 is positive. The axial rake angle of first surface 71 may be more than the axial rake angle of main flute surface 72. The axial rake angle of main flute surface 72 may be more than the axial rake angle of auxiliary flute surface 73. The axial rake angle of auxiliary flute surface 73 may be more than the axial rake angle of thinning face 74. The axial rake angle of thinning face 74 is substantially 0°.

As shown in Fig. 5, the axial rake angle of auxiliary flute surface 73 may be monotonously increased in the direction toward the outer peripheral side. The axial rake angle of main flute surface 72 may be monotonously increased in the direction toward the outer peripheral side. The axial rake angle of first surface 71 may have a part that is monotonously increased in the direction toward the outer peripheral side. The axial rake angle of auxiliary flute surface 73 at first end portion 91 may be less than the axial rake angle of auxiliary flute surface 73 at second end portion 92.

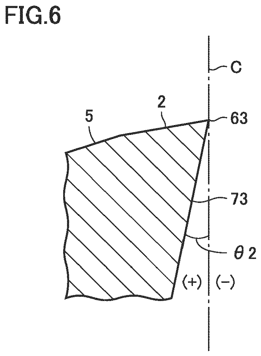

Fig. 6 is a schematic cross sectional view taken along a line VI-VI of Fig. 4. The cross section shown in Fig. 6 is parallel to center axis X and passes through an intermediate position 93 of auxiliary cutting edge portion 63. Further, the cross section shown in Fig. 6 is perpendicular to a perpendicular line drawn from intermediate position 93 onto center axis X. Intermediate position 93 of auxiliary cutting edge portion 63 is a point at which a creeping distance from first end portion 91 is the same as a creeping distance from second end portion 92 among points on auxiliary cutting edge portion 63. As shown in Fig. 6, when viewed in the direction perpendicular to center axis X and parallel to the radial direction, an axial rake angle θ2 of auxiliary flute surface 73 at intermediate position 93 of auxiliary cutting edge portion 63 is positive. Axial rake angle θ2 of auxiliary flute surface 73 is a rake angle of auxiliary flute surface 73 with respect to a straight line C that passes through a specific position of auxiliary cutting edge portion 63 and that is parallel to center axis X.

As shown in Fig. 6, the expression "axial rake angle θ2 is 'positive'" means a state in which when viewed in a direction that passes through the specific position of auxiliary cutting edge portion 63 and that is perpendicular to center axis X and parallel to the radial direction, auxiliary flute surface 73 is inclined, in the direction opposite to rotation direction R of drill 100, with respect to straight line C that passes through the specific position of auxiliary cutting edge portion 63 and that is parallel to center axis X. On the contrary, the expression "axial rake angle θ2 is 'negative'" means a state in which when viewed in the direction that passes through the specific position of auxiliary cutting edge portion 63 and that is perpendicular to center axis X and parallel to the radial direction, auxiliary flute surface 73 is inclined, in rotation direction R of drill 100, with respect to straight line C that passes through the specific position of auxiliary cutting edge portion 63 and that is parallel to center axis X.

Next, function and effect of drill 100 according to the present embodiment will be described.

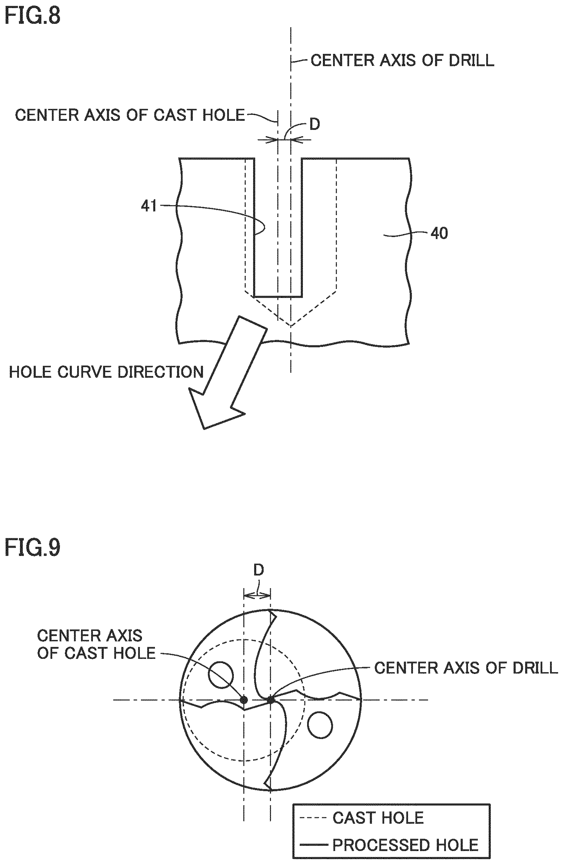

A hole (cast hole) formed by casting in an aluminum product may be varied in size and positional precision depending on precision of the casting. Fig. 8 is a schematic cross sectional view for illustrating a deviation between the center axis of the cast hole and the center axis of the drill. As shown in Fig. 8, a workpiece 40 is provided with a cast hole 41. Fig. 9 is a schematic plan view for illustrating the deviation between the center axis of the cast hole and the center axis of the drill. As shown in Figs. 8 and 9, the center axis of the cast hole does not coincide with the center axis of the drill. As shown in Fig. 9, when viewed in a plan view, the center axis of the cast hole is deviated from the center axis of the drill by a distance D.

As shown in Fig. 8, when drill 100 is used to process the cast hole, a cross sectional area of contact between workpiece 40 and drill 100 on the right side of the cast hole may be larger than a cross sectional area of contact between workpiece 40 and drill 100 on the left side of the cast hole. In this case, drill 100 receives force acting from the right toward the left in Fig. 8 and is accordingly deflected to the left side. In other words, drill 100 is deflected in the direction of the center axis of the cast hole and becomes eccentric. As a result, the actual central position of drill 100 is deviated from the target central position of drill 100. A value twice as large as the deviation between the actual central position of drill 100 and the target central position of drill 100 represents a hole positional tolerance. A smaller hole positional tolerance is more desirable.

According to drill 100 of the present embodiment, when viewed in the direction along center axis X, a value obtained by dividing the maximum value of the diameter of second main body portion 82 by the diameter of first main body portion 81 is 1.5 or more. The ratio of core thickness Bm of main flute surface 72 to the diameter of first main body portion 81 is 40% or more and 60% or less. Thus, rigidity of drill 100 can be improved. Therefore, when drill 100 is used to process a cast hole, drill 100 can be suppressed from being deflected. Further, chip discharging surface 1 has auxiliary flute surface 73 provided in the form of a helix around center axis X, auxiliary flute surface 73 being contiguous to cutting edge 4, auxiliary flute surface 73 being recessed in the direction opposite to rotation direction R of drill 100. Axial rake angle θ2 of auxiliary flute surface 73 at intermediate position 93 of auxiliary cutting edge portion 63 is positive. When core thickness Bm of main flute surface 72 is increased, processing is started with the thinning face having an axial rake angle of 0°, with the result that cuttability is deteriorated. Since axial rake angle θ2 of auxiliary flute surface 73 is positive at intermediate position 93 of auxiliary cutting edge portion 63, the cuttability of cutting edge 4 can be improved. As a result, the hole positional tolerance can be reduced.

When the ratio of the core thickness of main flute surface 72 to the diameter of first main body portion 81 of drill 100 is increased, component force (thrust) in the axial direction becomes large. On the other hand, aluminum is a material having a hardness lower than that of steel. Therefore, when performing a perforation process onto an aluminum product, the component force in the axial direction becomes smaller than that when performing a perforation process onto a steel product. Therefore, when performing a perforation process onto an aluminum product, the ratio of the core thickness of main flute surface 72 to the diameter of first main body portion 81 of drill 100 can be made large.

Further, when the ratio of the core thickness of main flute surface 72 to the diameter of first main body portion 81 of drill 100 is made large, the cross sectional area of a chip discharging flute becomes small, with the result that chip discharging performance is deteriorated. However, chip of each of an aluminum alloy casting and an aluminum alloy die cast is more likely to be cut off as compared with that of steel. Therefore, in the case of performing a perforation process onto an aluminum product, chip can be suppressed from being clogged in the flute even when the cross sectional area of the flute is small.

Further, according to drill 100 of the present embodiment, when viewed in the direction along center axis X, the concave value H of auxiliary cutting edge portion 63 with respect to the straight line passing through first end portion 91 and second end portion 92 may be 1% or more and 5% or less of the diameter of first main body portion 81. Thus, the hole positional tolerance can be further reduced.

When performing a perforation process using drill 100, drill 100 is rotated around center axis X and is also vibrated in the horizontal direction. Therefore, in order to reduce the hole positional tolerance, it has been common technical knowledge for one having ordinary skill in the art to increase a contact area with an inner wall surface of the hole by increasing the length of margin 31 in the peripheral direction, thereby suppressing the vibration in the horizontal direction. However, on contrary to the common technical knowledge for one having ordinary skill in the art, when the inventors have increased the length of margin 31 (first margin 31) in the peripheral direction and measured the hole positional tolerance, it has been found that the hole positional tolerance becomes large when the length of first margin 31 is large. Based on this finding, the inventors have conceived to make first margin 31 smaller than that in an ordinary case.

Further, according to drill 100 of the present embodiment, margin 31 contiguous to each of first cutting edge 4 and flank face 2 is provided at first outer peripheral surface 3. The length of margin 31 in the peripheral direction is 0.1 mm or more and 0.3 mm or less. Thus, the hole positional tolerance can be reduced.

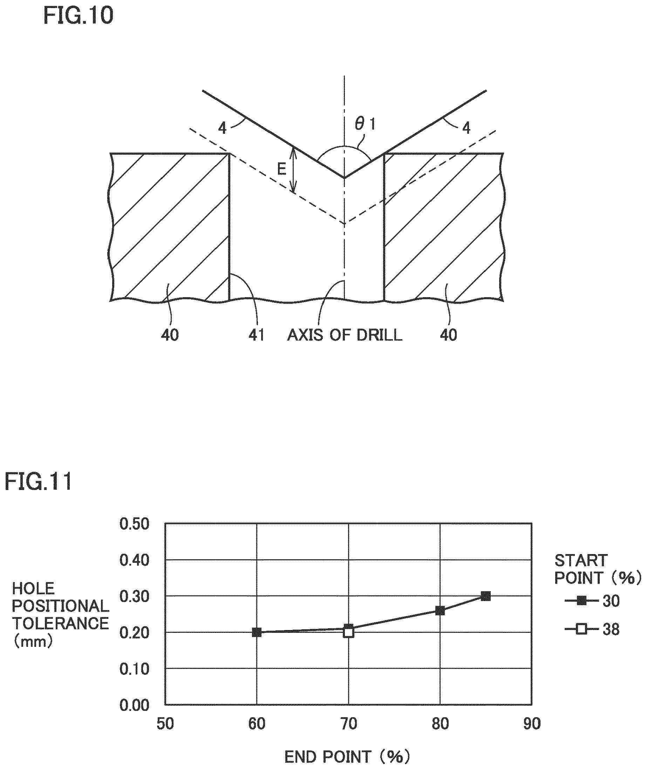

Fig. 10 is a schematic cross sectional view showing a state in which a cast hole is processed by drill 100. In Fig. 10, a state of first cutting edge 4 indicated by a solid line is a state at a time at which first cutting edge 4 starts to bite into a workpiece (i.e., a time of start of processing). The state of first cutting edge 4 indicated by the solid line is a state (first state) in which first cutting edge 4 is in contact with the right-side inner wall surface of the cast hole but is not in contact with the left-side inner wall surface. On the other hand, in Fig. 10, a state of first cutting edge 4 indicated by a broken line is a state (second state) in which first cutting edge 4 starts to come into contact with both the right-side inner wall surface and the left-side inner wall surface of the cast hole.

When point angle θ1 of first cutting edge 4 is large, a distance (unstable processing distance E) from the first state to the second state can be reduced as compared with a case where point angle θ1 of first cutting edge 4 is small. Further, when point angle θ1 of first cutting edge 4 is large, component force in the horizontal direction can be reduced as compared with a case where point angle θ1 of first cutting edge 4 is small.

According to drill 100 of the present embodiment, point angle θ1 of first cutting edge 4 may be 150° or more and 175° or less. Thus, the unstable processing distance can be reduced and the component force in the horizontal direction can be reduced. Therefore, eccentricity of drill 100 can be suppressed. As a result, the hole positional tolerance can be further reduced.

Further, according to drill 100 of the present embodiment, the diameter of first main body portion 81 may be 1 mm or more and 10 mm or less. When the diameter of first main body portion 81 is small to fall within the above range, the hole positional tolerance is likely to be significantly large. According to drill 100 of the present embodiment, the hole positional tolerance can be particularly effectively reduced when the diameter of first main body portion 81 is small.

### Example 1

### (Sample Preparation)

First, drills 100 of samples 1-1 to 1-4 were prepared. Each of drills 100 of samples 1-1 and 1-2 is a drill 100 according to a comparative example. Each of drills 100 of samples 1-3 and 1-4 is a drill 100 according to an example of the present disclosure. In each of drills 100 of samples 1-1 to 1-4, the diameter (first diameter W 1) of first outer peripheral surface 3 was 6 mm. In drills 100 of samples 1-1 to 1-4, the maximum diameters of second main body portions 82 were 6 mm, 7 mm, 9 mm, and 11 mm, respectively. That is, in drills 100 of samples 1-1 to 1-4, the values obtained by dividing the maximum values of the diameters of second main body portions 82 by the diameters of first main body portions 81 were 6/6, 7/6, 9/6, and 11/6, respectively.

In each of drills 100 of samples 1-1 to 1-4, the ratio of core thickness Bm of main flute surface 72 to the diameter (first diameter W 1) of first outer peripheral surface 3 of drill 100 was 50%. The distance between center axis X and first end portion 91 (starting point) was 30% of the distance between center axis X and outer peripheral end portion 60 of first cutting edge 4. The distance between center axis X and second end portion 92 (end point) was 70% of the distance between center axis X and outer peripheral end portion 60 of first cutting edge 4. The concave value H was 2.9% of the diameter of first outer peripheral surface 3. The length of first margin 31 (first length A1) was 0.15 mm. Point angle θ1 of first cutting edge 4 was 160°.

### (Evaluation Method)

Next, each of drills 100 of samples 1-1 to 1-4 was used to process a cast hole. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

**[Table 1]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 1-1 | 6 | 50 | 30% | 70% | 2.9 | 0.15 | 160 | 1.29 |
| Sample 1-2 | 7 | | | | | | | 0.85 |
| Sample 1-3 | 9 | | | | | | | 0.37 |
| Sample 1-4 | 11 | | | | | | | 0.26 |

As shown in Table 1, the degrees of hole positions when drills 100 of samples 1-1 to 1-4 were used to process the cast holes were 1.29 mm, 0.85 mm, 0.37 mm, and 0.26 mm, respectively. The degrees of hole positions when drills 100 of samples 1-3 and 1-4 were used to process the cast holes were smaller than the degrees of hole positions when drills 100 of samples 1-1 and 1-2 were used to process the cast holes. In view of the above, it was proved that when the value obtained by dividing the maximum value of the diameter of second main body portion 82 by the diameter of first main body portion 81 is 1.5 or more, the hole positional tolerance is significantly reduced.

### Example 2

### (Sample Preparation)

First, drills 100 of samples 2-1 to 2-4 were prepared. Drill 100 of sample 2-1 is a drill 100 according to a comparative example. Each of drills 100 of samples 2-2 to 2-4 is a drill 100 according to an example of the present disclosure. In each of drills 100 of samples 2-1 to 2-4, the diameter (first diameter W 1) of first outer peripheral surface 3 was 6 mm. The maximum diameter of second main body portion 82 was 11 mm. In drills 100 of samples 2-1 to 2-4, the ratios of core thicknesses Bm of main flute surfaces 72 to the diameters of first main body portions 81 were 30%, 40%, 50%, and 60%, respectively.

In each of drills 100 of samples 2-1 to 2-4, the distance between center axis X and first end portion 91 (starting point) was 30% of the distance between center axis X and outer peripheral end portion 60 of first cutting edge 4. The distance between center axis X and second end portion 92 (end point) was 70% of the distance between center axis X and outer peripheral end portion 60 of first cutting edge 4. The concave value H was 2.9% of the diameter of first outer peripheral surface 3. The length of first margin 31 (first length A1) was 0.15 mm. Point angle θ1 of first cutting edge 4 was 160°.

### (Evaluation Method)

Next, each of drills 100 of samples 2-1 to 2-4 was used to process a cast hole. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

**[Table 2]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 2-1 | 11 | 30 | 30% | 70% | 2.9 | 0.15 | 160 | 0.51 |
| Sample 2-2 | | 40 | | | | | | 0.33 |
| Sample 2-3 | | 50 | | | | | | 0.26 |
| Sample 2-4 | | 60 | | | | | | 0.23 |

As shown in Table 2, the degrees of hole positions when drills 100 of samples 2-1 to 2-4 were used to process the cast holes were 0.51 mm, 0.33 mm, 0.26 mm, and 0.23 mm, respectively. The degrees of hole positions when drills 100 of samples 2-2 to 2-4 were used to process the cast holes were smaller than the hole positional tolerance when drill 100 of sample 2-1 was used to process the cast hole. In view of the above, it was proved that when the ratio of core thickness Bm of main flute surface 72 to the diameter of first main body portion 81 was 40% or more and 60% or less, the hole positional tolerance was significantly reduced.

### Example 3

### (Sample Preparation)

First, drills 100 of samples 3-1 to 3-9 were prepared. Each of drills 100 of samples 3-1, 3-6, 3-8 and 3-9 is a drill 100 according to a comparative example. Each of drills 100 of samples 3-2 to 3-5 and 3-7 is a drill 100 according to an example of the present disclosure. In each of drills 100 of samples 3-1 to 3-9, the diameter (first diameter W1) of first outer peripheral surface 3 was 6 mm. The maximum diameter of second main body portion 82 was 11 mm. In each of drills 100 of samples 3-1 to 3-9, the ratio of core thickness Bm of main flute surface 72 to the diameter of first main body portion 81 was 50%.

In each of drills 100 of samples 3-1 to 3-9, the distance between center axis X and first end portion 91 (starting point) was 18% or more and 45% or less of the distance between center axis X and outer peripheral end portion 60 of first cutting edge 4. The distance between center axis X and second end portion 92 (end point) was 60% or more and 85% or less of the distance between center axis X and outer peripheral end portion 60 of first cutting edge 4. The concave value H was 1.5% or more and 6.2% or less of the diameter of first outer peripheral surface 3. The length of first margin 31 (first length A1) was 0.15 mm. Point angle θ1 of first cutting edge 4 was 160°.

### (Evaluation Method)

Next, each of drills 100 of samples 3-1 to 3-9 was used to process a cast hole. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

Fig. 11 is a diagram showing a relation between the end point of the auxiliary flute and the hole positional tolerance. As shown in Fig. 11 and Table 3, when the ratio of the start point (specifically, the ratio of the distance between center axis X and first end portion 91 (starting point) to the distance between center axis X and outer peripheral end portion 60 of first cutting edge 4) is constant (30%), the hole positional tolerance is reduced as the ratio of the end point (specifically, the ratio of the distance between center axis X and second end portion 92 (end point) to the distance between center axis X and outer peripheral end portion 60 of first cutting edge 4) is smaller.

**[Table 3]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 3-3 | 11 | 50 | 30 | 60 | 1.8 | 0.15 | 160 | 0.20 |
| Sample 3-4 | | | | 70 | 3.3 | | | 0.21 |
| Sample 3-5 | | | | 80 | 5.4 | | | 0.26 |
| Sample 3-6 | | | | 85 | 6.2 | | | 0.30 |
| Sample 3-7 | | | 38 | 70 | 2.3 | | | 0.20 |

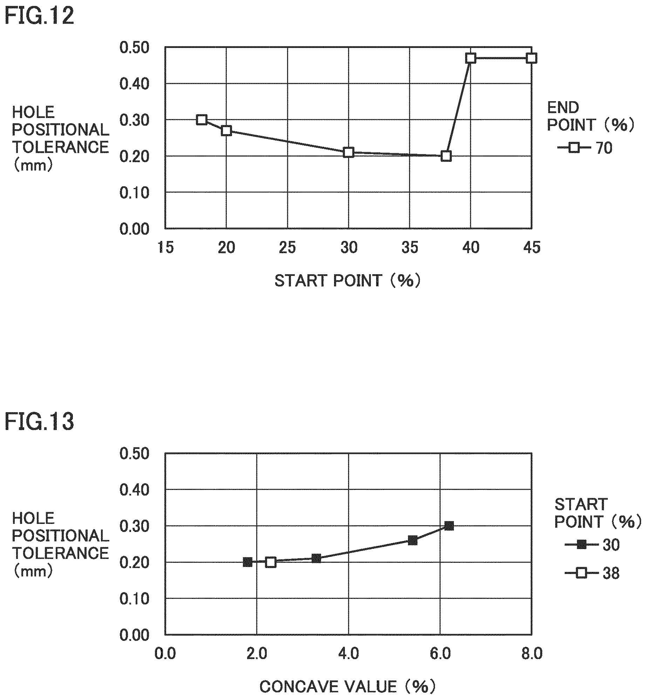

Fig. 12 is a diagram showing a relation between the start point of the auxiliary flute and the hole positional tolerance. As shown in Fig. 12 and Table 4, when the distance between center axis X and first end portion 91 (starting point) is 20% or more and less than 40% of the distance between center axis X and outer peripheral end portion 60 of first cutting edge 4, the hole positional tolerance is reduced. In view of the above, it was proved that when the distance between center axis X and first end portion 91 (start point) is 20% or more and less than 40% of the distance between center axis X and outer peripheral end portion 60 of first cutting edge 4 and the distance between center axis X and second end portion 92 (end point) is 60% or more and 80% or less of the distance between center axis X and outer peripheral end portion 60 of first cutting edge 4, the hole positional tolerance is significantly reduced.

**[Table 4]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 3-1 | 11 | 50 | 18 | 70 | 4.2 | 0.15 | 160 | 0.30 |
| Sample 3-2 | | | 20 | 70 | 3.8 | | | 0.27 |
| Sample 3-4 | | | 30 | 70 | 3.3 | | | 0.21 |
| Sample 3-7 | | | 38 | 70 | 2.3 | | | 0.20 |
| Sample 3-8 | | | 40 | 70 | 1.8 | | | 0.47 |
| Sample 3-9 | | | 45 | 70 | 1.5 | | | 0.47 |

Fig. 13 is a diagram showing a relation between the concave value H of the auxiliary flute and the hole positional tolerance. As shown in Fig. 13 and Table 5, when the ratio of the starting point (specifically, the ratio of the distance between center axis X and first end portion 91 (starting point) to the distance between center axis X and outer peripheral end portion 60 of first cutting edge 4) is constant (30%), the hole positional tolerance is reduced as the ratio of the concave value H to the diameter of first outer peripheral surface 3 is smaller. When the ratio of the distance between center axis X and first end portion 91 (start point) is 20% or more and less than 40% and the ratio of the concave value H to the diameter of first outer peripheral surface 3 is 5% or less, the hole positional tolerance is reduced.

**[Table 5]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 3-3 | 11 | 50 | 30 | 60 | 1.8 | 0.15 | 160 | 0.20 |
| Sample 3-4 | | | | 70 | 3.3 | | | 0.21 |
| Sample 3-5 | | | | 80 | 5.4 | | | 0.26 |
| Sample 3-6 | | | | 85 | 6.2 | | | 0.30 |
| Sample 3-7 | | | 38 | 70 | 2.3 | | | 0.20 |

### Example 4

### (Sample Preparation)

First, drills 100 of samples 3-10 to 3-12 were prepared. Drill 100 of sample 3-11 is a drill 100 according to a comparative example. No auxiliary flute is formed in the chip discharging flute of drill 100 of sample 3-11. Each of drills 100 of samples 3-10 and 3-12 is a drill 100 according to an example of the present disclosure. In each of the chip discharging flutes of drills 100 of samples 3-10 and 3-12, the auxiliary flute is formed.

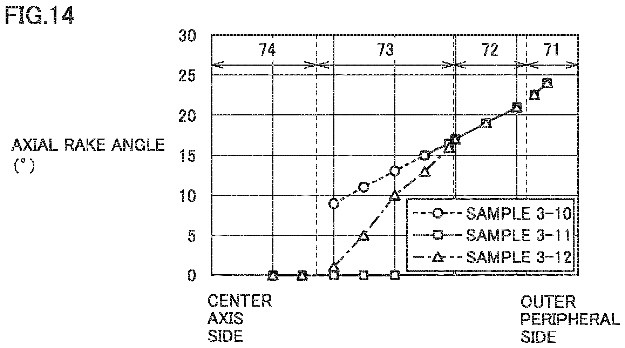

Fig. 14 is a diagram showing the axial rake angle of the chip discharging surface of the drill. As shown in Fig. 14, the axial rake angle at auxiliary flute surface 73 of drill 100 of sample 3-10 is more than the axial rake angle at auxiliary flute surface 73 of drill 100 of sample 3-12. The axial rake angle at auxiliary flute surface 73 of drill 100 of sample 3-10 is 9° or more and 17° or less. The axial rake angle at auxiliary flute surface 73 of drill 100 of sample 3-12 is 1° or more and 16° or less.

### (Evaluation Method)

Next, each of drills 100 of samples 3-10 to 3-12 was used to process a cast hole. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

**[Table 6]**

| Names of Samples | Hole Positional Tolerance (Mm) | Auxiliary Flute | Axial Rake Angle of Auxiliary Flute Surface |
|---|---|---|---|
| Sample 3-10 | 0.26 | Provided | 9° or more and 17° or less |
| Sample 3-11 | 0.43 | Not Provided | - |
| Sample 3-12 | 0.40 | Provided | 1° or more and 16° or less |

As shown in Table 6, the degrees of hole positions when drills 100 of samples 3-10 to 3-12 were used to process the cast holes were 0.26 mm, 0.43 mm, and 0.40 mm, respectively. In view of the above, it was proved that drill 100 in which the auxiliary flute is formed in chip discharging surface 1 serves to reduce the hole positional tolerance as compared with drill 100 in which no auxiliary flute is formed in chip discharging surface 1. Also, it was proved that the hole positional tolerance was further reduced by increasing axial rake angle θ2 of the auxiliary flute.

### Example 5

### (Sample Preparation)

First, drills 100 of samples 4-1 to 4-4 were prepared. Each of drills 100 of samples 4-3 and 4-4 is a drill 100 according to a comparative example. Each of drills 100 of samples 4-1 and 4-2 is a drill 100 according to an example of the present disclosure. In each of drills 100 of samples 4-1 to 4-4, the diameter (first diameter W1) of first outer peripheral surface 3 was 6 mm. In drills 100 of samples 4-1 to 4-4, the lengths (first lengths A1) of first margins 31 were 0.1 mm, 0.3 mm, 0.6 mm, and 1.5 mm, respectively.

In each of drills 100 of samples 4-1 to 4-4, the maximum diameter of second main body portion 82 was 11 mm. The ratio of core thickness Bm of main flute surface 72 to the diameter (first diameter W 1) of first outer peripheral surface 3 of drill 100 was 50%. The distance between center axis X and first end portion 91 (starting point) was 30% of the distance between center axis X and outer peripheral end portion 60 of first cutting edge 4. The distance between center axis X and second end portion 92 (end point) was 70% of the distance between center axis X and outer peripheral end portion 60 of first cutting edge 4. The concave value H was 2.9% of the diameter of first outer peripheral surface 3. Point angle θ1 of first cutting edge 4 was 160°.

### (Evaluation Method)

Next, each of drills 100 of samples 4-1 to 4-4 was used to process a cast hole. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

**[Table 7]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 4-1 | 11 | 50 | 30% | 70% | 2.9 | 0.1 | 160 | 0.27 |
| Sample 4-2 | | | | | | 0.3 | | 0.33 |
| Sample 4-3 | | | | | | 0.6 | | 0.45 |
| Sample 4-4 | | | | | | 1.5 | | 0.72 |

As shown in Table 7, the degrees of hole positions when drills 100 of samples 4-1 to 4-4 were used to process the cast holes were 0.27 mm, 0.33 mm, 0.45 mm, and 0.72 mm, respectively. The degrees of hole positions when drills 100 of samples 4-1 and 4-2 were used to process the cast holes were smaller than the degrees of hole positions when drills 100 of samples 4-3 and 4-4 were used to process the cast holes. In view of the above, it was proved that when the length of first margin 31 (first length A1) is 0.1 mm or more and 0.3 mm or less, the hole positional tolerance is significantly reduced.

### Example 6

### (Sample Preparation)

First, drills 100 of samples 5-1 to 5-5 were prepared. Each of drills 100 of samples 5-1 and 5-2 is a drill 100 according to a comparative example. Each of drills 100 of samples 5-3 to 5-5 is a drill 100 according to an example of the present disclosure. In each of drills 100 of samples 5-1 to 5-5, the diameter (first diameter W1) of first outer peripheral surface 3 was 6 mm. In drills 100 of samples 5-1 to 5-5, point angles θ1 of first cutting edges 4 were 135°, 140°, 150°, 160°, and 175°, respectively.

In each of drills 100 of samples 5-1 to 5-5, the maximum diameter of second main body portion 82 was 11 mm. The ratio of core thickness Bm of main flute surface 72 to the diameter (first diameter W1) of first outer peripheral surface 3 of drill 100 was 50%. The distance between center axis X and first end portion 91 (starting point) was 30% of the distance between center axis X and outer peripheral end portion 60 of first cutting edge 4. The distance between center axis X and second end portion 92 (end point) was 70% of the distance between center axis X and outer peripheral end portion 60 of first cutting edge 4. The concave value H was 2.9% of the diameter of first outer peripheral surface 3. The length of first margin 31 (first length A1) was 0.15 mm.

### (Evaluation Method)

Next, each of drills 100 of samples 4-1 to 4-4 was used to process a cast holes. A workpiece was ADC12, which is an Al-Si-Cu-based die-cast material complying with the specification of Japanese Industrial Standard (JIS) H5302: 2006. A facility was a vertical machining center (ROBODRILL α-T14iF_{La} manufactured by FANUC Corporation). The number of rotations was 10000 rpm. A feed amount (f) was 1 mm/rotation. A depth was 20 mm. Internal supply of oil was employed.

### (Evaluation Results)

**[Table 8]**

| Names of Samples | Maximum Diameter (mm) | Core Thickness of Main Flute Surface (%) | Auxiliary Flute | | | Length of First Margin (mm) | Point Angle (°) | Hole Positional Tolerance (mm) |
|---|---|---|---|---|---|---|---|---|
| | | | Starting Point (%) | End Point (%) | Concave Value (%) | | | |
| Sample 5-1 | 11 | 50 | 30% | 70% | 2.9 | 0.15 | 135 | 0.72 |
| Sample 5-2 | | | | | | | 140 | 0.5 |
| Sample 5-3 | | | | | | | 150 | 0.32 |
| Sample 5-4 | | | | | | | 160 | 0.26 |
| Sample 5-5 | | | | | | | 175 | 0.25 |

As shown in Table 8, the degrees of hole positions when drills 100 of samples 5-1 to 5-5 were used to process the cast holes were 0.72 mm, 0.5 mm, 0.32 mm, 0.26 mm, and 0.25 mm, respectively. The degrees of hole positions when drills 100 of samples 5-3 to 5-5 were used to process the cast holes were smaller than the degrees of hole positions when drills 100 of samples 5-1 and 5-2 were used to process the cast holes. In view of the above, it was proved that when point angle θ1 of first cutting edge 4 is 150° or more and 175° or less, the hole positional tolerance is significantly reduced.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: chip discharging surface; 2: flank face; 3: first outer peripheral surface (outer peripheral surface); 4: first cutting edge (cutting edge); 5: first rear surface; 6: second rear surface; 7: second cutting edge; 8: coolant supply hole; 9: second outer peripheral surface; 11: front end; 12: rear end; 13: shank; 14: flute surface; 21: first outer peripheral region; 22: second outer peripheral region; 23: third outer peripheral region; 24: fourth outer peripheral region; 25: fifth outer peripheral region; 31: first margin (margin); 32: second margin; 40: workpiece; 41: hole; 50: shank outer peripheral surface; 60: outer peripheral end portion; 61: first cutting edge portion; 62: second cutting edge portion; 63: auxiliary cutting edge portion; 64: thinning cutting edge portion; 70: auxiliary flute; 71: first surface; 72: main flute surface; 73: auxiliary flute surface; 74: thinning face; 81: first main body portion; 82: second main body portion; 83: third main body portion; 84: shank portion; 91: first end portion; 92: second end portion; 93: intermediate position; 100: drill; A1: first length; A2: second length; B: core thickness; C: straight line; D: distance; E: unstable processing distance; H: concave value; L1: first distance; L2: second distance; L3: third distance; L4: fourth distance; R: first arrow; W1: first diameter; W2: second diameter; W3: third diameter; X: center axis; θ1: point angle; θ2: axial rake angle.

## Claims

1. A drill comprising:
a first main body portion;
a second main body portion located rearward with respect to the first main body portion, the second main body portion having a diameter different from a diameter of the first main body portion, wherein
the first main body portion includes
a chip discharging surface provided in a form of a helix around a center axis of the drill,
a flank face contiguous to the chip discharging surface, and
an outer peripheral surface contiguous to each of the chip discharging surface and the flank face,
a ridgeline between the chip discharging surface and the flank face constitutes a cutting edge,
the chip discharging surface includes
a main flute surface provided in a form of a helix around the center axis, the main flute surface being contiguous to the cutting edge, and
an auxiliary flute surface provided in a form of a helix around the center axis, the auxiliary flute surface being contiguous to each of the cutting edge and the main flute surface, the auxiliary flute surface being recessed with respect to the main flute surface in a direction opposite to a rotation direction of the drill,
an auxiliary cutting edge portion constituted of a boundary between the flank face and the auxiliary flute surface has a first end portion and a second end portion located opposite to the first end portion,
when viewed in a direction along the center axis, a value obtained by dividing a maximum value of the diameter of the second main body portion by the diameter of the first main body portion is 1.5 or more,
when viewed in the direction along the center axis, a distance between the center axis and the first end portion is 20% or more and less than 40% of a distance between the center axis and an outer peripheral end portion of the cutting edge, and a distance between the center axis and the second end portion is 60% or more and 80% or less of the distance between the center axis and the outer peripheral end portion,
a ratio of a core thickness of the main flute surface to the diameter of the first main body portion is 40% or more and 60% or less, and
an axial rake angle of the auxiliary flute surface at an intermediate position of the auxiliary cutting edge portion is positive.

2. The drill according to claim 1, wherein when viewed in the direction along the center axis, a concave value of the auxiliary cutting edge portion with respect to a straight line passing through the first end portion and the second end portion is 1% or more and 5% or less of the diameter of the first main body portion.

3. The drill according to claim 1 or 2, wherein
a margin contiguous to each of the cutting edge and the flank face is provided at the outer peripheral surface, and
a length of the margin in a peripheral direction is 0.1 mm or more and 0.3 mm or less.

4. The drill according to any one of claims 1 to 3, wherein a point angle of the cutting edge is 150° or more and 175° or less.

5. The drill according to any one of claims 1 to 4, wherein the diameter of the first main body portion is 1 mm or more and 10 mm or less.
